# EUROPÄISCHE PATENTSCHRIFT

(11) **EP 3 724 407 B1**
(45) Veröffentlichungstag und Bekanntmachung des Hinweises auf die Patenterteilung: **09.11.2022**
(21) Anmeldenummer: 18833173.0
(22) Anmeldetag: 12.12.2018
(51) Int. Cl.: E02D 27/42, F03D 13/20

(54) **FUNDAMENT FÜR EINE WINDKRAFTANLAGE**
FOUNDATION FOR A WIND TURBINE
FONDATION POUR UNE ÉOLIENNE

(30) Priorität: 13.12.2017 DE 102017011505; 29.05.2018 DE 102018112857
(43) Veröffentlichungstag der Anmeldung: 21.10.2020
(60) Teilanmeldung: 21154699.9
(73) Patentinhaber: Smart & Green Mukran Concrete GmbH, 18546 Sassnitz (DE)
(72) Erfinder: PRASS, Gregor, 22455 Hamburg (DE); SCHRIEFER, Christoph, 19230 Redefin (DE)
(74) Vertreter: Klickow & Wetzel PartGmbB
(86) Internationale Anmeldenummer: PCT/EP2018/084581
(87) Internationale Veröffentlichungsnummer: WO 2019/115622

(56) Entgegenhaltungen:
- EP-B1- 1 058 787
- WO-A1-2017/141095

## Beschreibung

Die Erfindung betrifft ein Fundament für eine Windkraftanlage, wobei das Fundament im Wesentlichen vorgefertigte Elemente, bevorzugt aus bewehrtem Beton, aufweist, mit einem ersten, sich vertikal erstreckenden sockelartig ausgeführten Abschnitt, auf dem ein Turm der Windkraftanlage anordbar ist, und einem zweiten sich im Wesentlichen horizontal erstreckenden Abschnitt als Fundamentkörper, der sich in Kontakt mit dem Boden befindet, wobei der erste Abschnitt oberhalb des zweiten Abschnitts angeordnet ist und wenigstens ein geschlossenes Sockelelement, bevorzugt hülsenförmig, aufweist, das ringförmig oder polygonal ausgeführt ist, und wobei der zweite Abschnitt aus wenigstens zwei Horizontalelementen gebildet ist, die jeweils wenigstens einen Sockelabschnitt aufweisen, wobei das wenigstens eine Sockelelement des ersten Abschnitts und der Sockelabschnitt des Horizontalelements des zweiten Abschnitts im Wesentlichen vertikale Durchbrüche aufweisen, die montiert miteinander fluchten, in denen im Wesentlichen vertikale Verspannelemente, bevorzugt Gewindestangen, angeordnet sind.

Fundamente für Windkraftanlagen werden im Wesentlichen als In-Situ-Betonfundamente ausgeführt. Dafür wird am Errichtungsort eine Grube ausgehoben, diese wird mit einer Sauberkeitsschicht versehen. Anschließend werden die Schalung und die Bewehrung errichtet und das Ganze mit Beton vor Ort gefüllt. Dabei wird ein flächiger Körper ggf. mit einem Sockel errichtet, siehe beispielsweise US 20160369520 A1 oder WO 2008/036934 A2. Neben dem Transportaufwand durch die der Lieferung des Betons der Schalung und der Bewehrung ist dieses vor Ort sehr arbeitsintensiv. Aus ist die Qualitätssicherung aufwendig bzw. je nach Witterung auch problembehaftet. Weiterhin ist der Rückbau nach dem Ende der Lebensdauer der Windkraftanlage teuer und sehr aufwendig.

Daher gibt es prinzipiell Bedarf, Fundamente von Windkraftanlagen aus vorgefertigten Elementen zu errichten, womit die vorgenannten Probleme reduziert bzw. eliminiert werden könnten. Prinzipiell ist vorteilhaft, dass bei einem Vorfertigen die Bauteile unter definierten Bedingungen standardisiert produziert werden können. Auch reduziert sich der Arbeitsaufwand vor Ort. Hierfür wurden verschiedene Ansätze im Stand der Technik beschrieben.

Beispielsweise zeigt WO 2008/036934 A2 eine Kombination aus vorgefertigten Elementen und klassischem Schalungs-/Bewehrungsbau. Dadurch werden die zuvor genannten Nachteile nur unwesentlich reduziert.

Weitere Ansätze für das Herstellen von Fundamenten für Windkraftanlagen aus vorgefertigten Bauteilen sind wie folgt im Stand der Technik gezeigt:
EP 1058787 B1 offenbart den Oberbegriff des Patentanspruch 1.

EP 1 074 663 A1 offenbart ein Fundament für eine Windkraftanlage mit einem Zentralkörper als Sockel mit daran angeschraubten sich seitlich erstreckenden sternförmig angeordneten Rippen/Vorsprüngen/Trägern. Rippen und Mittelkörper werden vor Ort horizontal miteinander verschraubt. Die Teile sind unter anderem aus Beton vorgefertigt und werden mittels LKW zur Baustelle angeliefert, per Kran angeordnet und vor Ort miteinander horizontal über Flansche und Verschraubungen verbunden. Weiterhin sind an der Außenseite der Rippen Anker notwendig, um einen hinreichenden Lastabtrag zu gewährleisten.

Nachteilig hierbei ist, dass auch hier erhebliche Kosten und erheblicher Arbeitsaufwand für Verbinden der Elemente und das Herstellen des statisch belastbaren Fundaments notwendig sind. Weiterhin sind zusätzliche Verankerungen notwendig.

WO 2004/101898 A2 offenbart ein Fundament für eine Windkraftanlage aus vorgefertigten Betoneinzelteilen, wobei entweder ein Zentralkörper vorgesehen ist, an dem Flächenkörper horizontal angeschraubt werden, oder das Fundament besteht ausschließlich aus Bauteilen, die sowohl einen flächigen Abschnitt und einen sockelartigen Abschnitt aufweisen, wobei diese dann horizontal miteinander mittels Verschraubung gegen Flansche verbunden werden.

Nachteilig hierbei ist, dass auch hier erhebliche Kosten und erheblicher Arbeitsaufwand für Verbinden der Elemente und das Herstellen des statisch belastbaren Fundaments notwendig sind.

EP 2182201 A1 offenbart zwei unterschiedliche Fundamente für eine Windkraftanlage.

Bei beiden wird aus vorgefertigten Betonteilen nach einer entsprechenden Anlieferung vor Ort ein Fundament errichtet. Beide enthalten einen flächigen Abschnitt und einen sockelartigen Abschnitt. In Variante 1 ist ein Zentralkörper vorgesehen. Die Rippen/Flächenelemente werden an diesen angesetzt. Montiert bilden die Rippen einen polygonalen Körper. Der Zentralkörper weist einen Vorsprung auf, der von einem entsprechenden Rücksprung an den Rippen umgriffen wird. Die Rippen werden zusätzlich mittels eines Zurrrings gegen den Zentralkörper arretiert. An den Flächenköpern sind Ankerstangen zur Montage des Turms vorgesehen. Bei der zweiten Variante weisen die Rippen horizontal vorspringende Ankerelemente auf, die sich im montierten Zustand radial in das Zentrum des Fundaments erstrecken. Unterhalb und oberhalb der Anker sind Platten vorgesehen. In den so gebildeten Hohlraum wird der Ortbeton eingebracht, um die Anker miteinander zu verbinden und einen Zentralkörper zu bilden. Bei beiden Varianten wird das horizontale Verbinden vereinfacht. Allerdings weisen sowohl die Rippen als auch der Zentralkörper Dimensionen und Massen auf, die einen Transport kompliziert gestalten.

WO 2017/141095 A1 und WO 2017/141098 A1 offenbaren ebenfalls ein Fundament für eine Windkraftanlage. Dieses Fundament wird aus vorgefertigten Rippenkörpern gebildet, die an ihrem inneren Ende einen sockelabschnitt aufweisen, auf dem der Turm der Windkraftanlage angeordnet wird. Die Rippen erstrecken sich strahlenförmig nach außen. Die Abschnitte zwischen den Rippen werden in einer weiteren Ausführungsform mit Plattenelementen, die gegen die Rippen mit Flanschen geschraubt werden, zur Herstellung einer Platte gefüllt. Mittig ist anstelle eines Zentralkörpers eine Stahlhülse vorgesehen, die mit im Rippeninneren vorgesehenen Bewehrungen und in inneren Hohlraum vorgesehenen Verstärkungsbalken verbunden ist. Die Rippen weisen eine Grundplatte auf. Auf der ein diagonales Verstärkungselement und der Sockelabschnitt einstückig angeordnet sind. Die Sockelabschnitte sind horizontal über Nut-FederElemente miteinander verbunden. Weiterhin weisen die Sockelabschnitte horizontale Öffnungen auf, in denen Spannelemente zum horizontalen Verbinden der Sockelabschnitte vorgesehen werden. Weiterhin sind in den Sockelabschnitten Ankerstangen für das Verbinden des Turms mit dem Fundament eingegossen. Weiterhin sind ebenfalls außenliegenden Bodenanker offenbart.

Nachteilig hierbei ist, dass auch hier erhebliche Kosten und erheblicher Arbeitsaufwand für Verbinden der Elemente und das Herstellen des statisch belastbaren Fundaments notwendig sind.

Aufgabe der Erfindung ist daher, die vorgenannten Nachteile zu überwinden und Fundamente für Windkraftanlagen aus vorgefertigten Elementen wirtschaftlich errichtbar zu machen.

Gelöst wird diese Aufgabe durch die Merkmalskombination des Patentanspruchs 1. Konkretisierungen der Erfindung sind in den Unteransprüchen ausgeführt.

Überraschender Weise hat sich gezeigt, dass es so auf einfache Weise möglich ist, auf horizontale Verbindungsmittel zu verzichten.

Eine Lehre sieht vor, dass oberhalb oder innerhalb des ersten Abschnitts ein Widerlager vorgesehen ist, gegen das die im Wesentlichen vertikalen Verspannelemente angeordnet und gespannt sind, wobei das obere Widerlager bevorzugt ein Flansch des Turmes der Windkraftanlage ist. Hierdurch wird es auf einfache Weise möglich, eine sichere Ver- bzw. Vorspannung zu gewährleisten.

Eine weitere Lehre sieht vor, dass das geschlossene Sockelelement des ersten Abschnitts aus wenigstens zwei Segmenten zusammengesetzt ist. Hierdurch ist es möglich, einen einfachen Transport auch bei Größen zu ermöglichen, der nur im Sondertransport oder gar nicht möglich wären.

Die Erfindung sieht vor, dass sich die Segmente in einem Verbindungsbereich überlappen, wobei auch die Durchbrüche im Überlappungsbereich überlappen. Hierdurch kann eine einfache und sichere Verbindung bereitgestellt werden.

Die Erfindung sieht vor, dass die Segmente in einem Verbindungsbereich mit im Wesentlichen vertikalen Stoßflächen aneinander Grenzen. Hierdurch kann eine einfache und sichere Verbindung bereitgestellt werden.

Eine weitere Lehre sieht vor, dass in einem Verbindungsbereich im Wesentlichen horizontale Bewehrungselement aus den Segmenten austreten, die sich im Verbindungsbereich überlappen. Hierdurch kann eine einfache und sichere Verbindung bereitgestellt werden.

Eine weitere Lehre sieht vor, dass sich die Segmente im Verbindungsbereich im Hinblick auf die Höhe der Segmente und/oder der Breite der Segmente verjüngen, wobei bevorzugt in den verjüngten Abschnitten Durchbrüche vorgesehen sind. Eine weitere Lehre der Erfindung sieht vor, dass sich die horizontalen Bewehrungselemente in den Verjüngungsabschnitten überlappen. Eine weitere Lehre der Erfindung sieht vor, dass der Verjüngungsbereich mit einem Mörtel verfüllt ist. Überraschender Weise hat sich gezeigt, dass hierdurch beim Vorsehen von Segmenten eine besonders belastbare und kostengünstige Verbindung bereitgestellt wird.

Eine weitere Lehre sieht vor, dass im ersten Abschnitt ein Versteifungselement vorgesehen ist. Es hat sich überraschender Weise gezeigt, dass es durch das Vorsehen eines Versteifungselements insbesondere im Sockelabschnitt möglich ist, auf einfache Weise eine überproportionale Stabilitätserhöhung bei segmentiertem Aufbau des Fundaments im Fundament zu erreichen.

Eine weitere Lehre sieht vor, dass das Versteifungselement keine Durchbrüche aufweist und/oder befestigungsmittelfrei im ersten Abschnitt angeordnet ist. Eine weitere Lehre der Erfindung sieht vor, dass das Versteifungselement als Hülse ausgeführt ist, deren lichter Innendurchmesser im Wesentlichen mit dem lichten Innendurchmesser des ersten und/oder zweiten Abschnitts bevorzugt übereinstimmt.

Eine weitere Lehre sieht vor, dass das Versteifungselement von einem Sockelelement mit im Wesentlichen gleicher oder größerer Höhe umschlossen ist, so dass bevorzugt das umschließende Sockelelement und das Versteifungselement im Wesentlichen die gleiche Wandstärke wie die darüber und/oder darunter angeordneten Sockelelemente aufweisen.

Eine weitere Lehre sieht vor, dass im zweiten Abschnitt ein Versteifungselement vorgesehen ist. Es hat sich überraschender Weise gezeigt, dass es durch das Vorsehen eines Versteifungselements insbesondere im zweiten Abschnitt möglich ist, auf einfache Weise eine überproportionale Stabilitätserhöhung bei segmentiertem Aufbau des Fundaments im Fundament zu erreichen.

Eine weitere Lehre sieht vor, dass das Versteifungselement keine Durchbrüche aufweist und/oder befestigungsmittelfrei im zweiten Abschnitt angeordnet ist. Eine weitere Lehre der Erfindung sieht vor, dass das Versteifungselement als Hülse ausgeführt ist, deren lichter Innendurchmesser im Wesentlichen mit dem lichten Innendurchmesser des ersten und/oder zweiten Abschnitts bevorzugt übereinstimmt.

Eine weitere Lehre sieht vor, dass das Versteifungselement von den Sockelabschnitten der wenigstens zwei Horizontalelemente mit im Wesentlichen gleicher oder größerer Höhe umschlossen ist.

Eine weitere Lehre sieht vor, dass die zwischen den Elementen vertikale und horizontale Fugen vorhanden sind, indem zwischen den Elementen vertikale und/oder horizontale Abstandshalter angeordnet sind. Eine weitere Lehre der Erfindung in Bezug auf alle Lösungen der Erfindung sieht vor, dass vertikale und/oder horizontale Fugen zwischen den Elementen wenigstens teilweise mit einem Mörtel gefüllt sind. Hierdurch wird die Stabilität des Fundaments unterstützt, da die übrigen Maßnahmen mit dem Bereitstellen eine monolithische Verbindung unterstützt werden.

Nachfolgend wird die Erfindung anhand von Ausführungsbeispielen in Verbindung mit einer Zeichnung näher erläutert. Dabei zeigen:
Fig. 1 bis 6b Ansichten und Details zu einer ersten Ausführungsform eines erfindungsgemäßen Fundaments,
Fig. 7 bis 14b Ansichten und Details zu einer zweiten Ausführungsform eines erfindungsgemäßen Fundaments,
Fig. 15 bis 20b Ansichten und Details zu einer dritten Ausführungsform eines erfindungsgemäßen Fundaments, und
Fig. 21 bis 26 Ansichten und Details zu einer vierten Ausführungsform eines erfindungsgemäßen Fundaments.

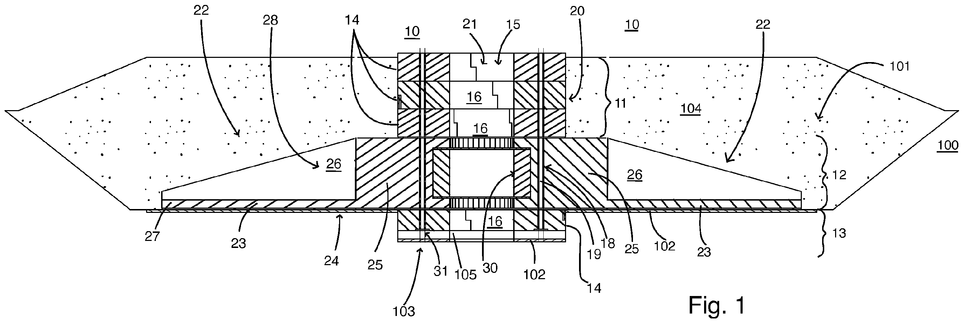

Fig. 1 bis 6b zeigen eine erste Ausführungsform eines erfindungsgemäßen Fundaments 10. Es ist in Fig. 1 in geschnittener Ansicht in einer Grube 101 im Boden 100 auf einer Sauberkeitsschicht 102 angeordnet. Es weist einen ersten Abschnitt 11 und einen zweiten Abschnitt 12 auf. Weiterhin ist auch ein dritter Abschnitt 13 vorgesehen, der in einer Vertiefung 103 vorgesehen ist.

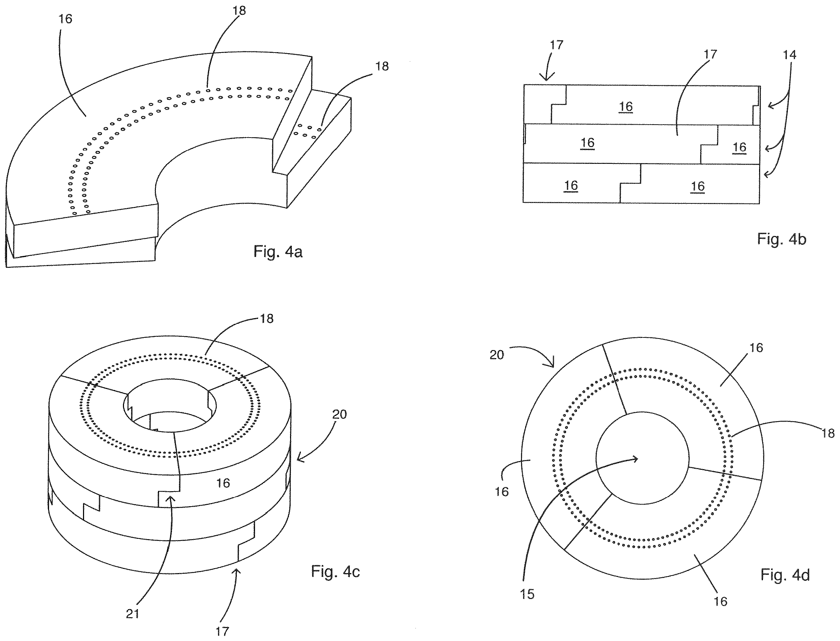

Der erste Abschnitt 11 ist als Sockel 20 aus geschlossenen Sockelelementen 14 aufgebaut (siehe Fig. 4a bis 4d), die hier bevorzugt als Kreisringe ausgeführt sind, so dass der Sockelabschnitt 11 einen Innenraum 15 aufweist. Die Sockelelemente 14 weisen vertikale Durchbrüche 18 auf, in denen nach der Montage des Fundaments 10 Ankerstangen 19 vorgesehen werden, um das Fundament 10 zu verspannen bzw. vorzuspannen.

Die Sockelelemente 14 sind aus Segmenten 16 gebildet. In dieser Ausführungsform weisen die Segmente einen Überlappungsbereich 17 auf, der so realisiert ist, dass Stufenabschnitte 21 vorgesehen sind, die ineinandergreifen. In den Stufenabschnitten 21 sind ebenfalls Durchbrüche 18 vorgesehen, so dass auch in den Stufenabschnitten 21 Ver- bzw. Vorspannung wirkt.

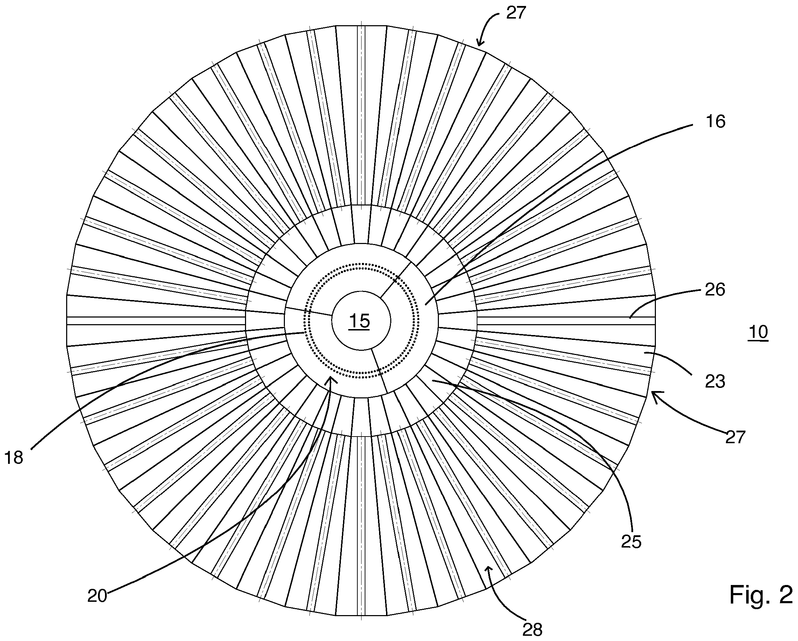

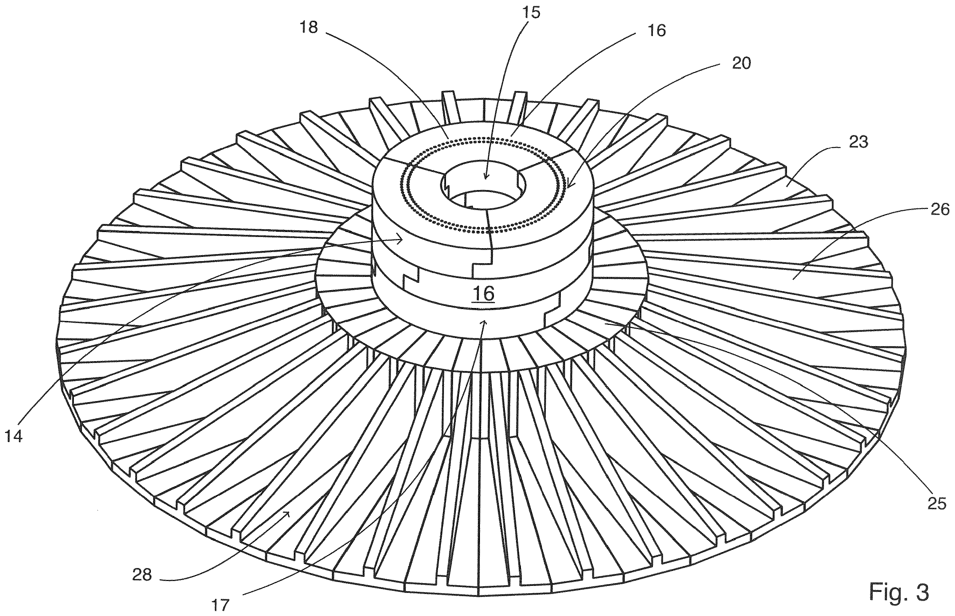

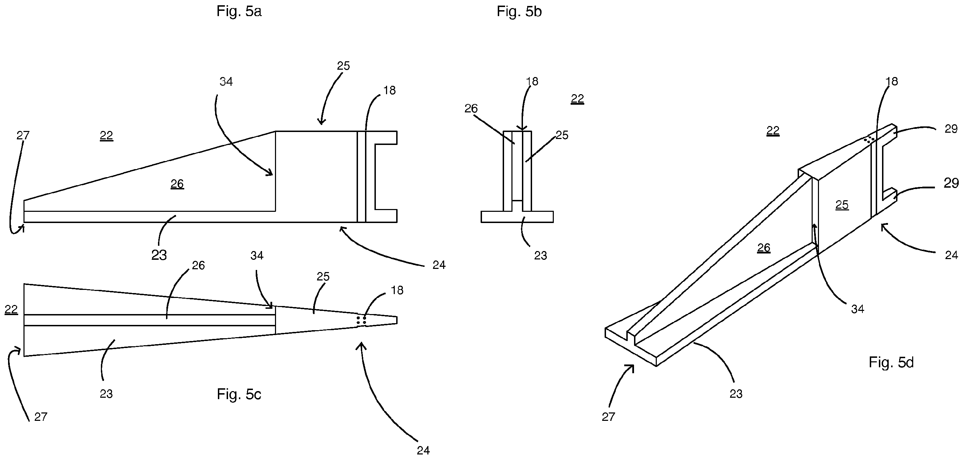

Der zweite Abschnitt 12 ist flächig ausgeführt. Alternativ kann aber auch eine sternform realisiert werden. Eine Draufsicht auf das Fundament 10 ist in Fig. 2 gezeigt. Fig. 3 zeigt eine räumliche Ansicht des Fundaments 10. Der zweite Abschnitt ist aus Horizontalelementen 22 in Form von Rippenelementen ausgeführt. Diese sind in den Fig. 5a bis 5d dargestellt. Diese erstrecken sich vom Innenraum 15 aus gesehen radial nach außen. Sie weisen eine Grundplatte 23 auf, die trapezförmig ausgeführt ist, so dass alle zusammengesetzten Grundplatten eine polygonale Fläche bilden (siehe Fig.2), die sich einer Kreisform annähert.

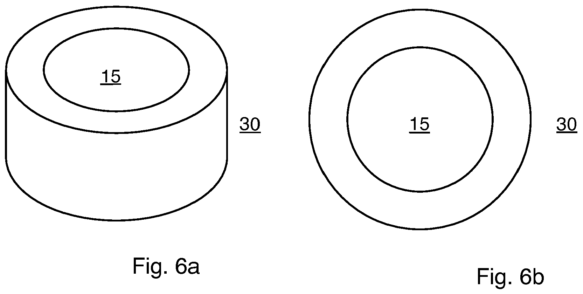

Am inneren Ende 24 der Grundplatte 23 ist ein Sockelabschnitt 25 vorgesehen, der mit dem Sockel 20 des ersten Abschnitts 11 korrespondiert. Im Sockelabschnitt 25 sind ebenfalls Durchbrüche 18 vorgesehen. Rechtwinklig auf der Grundplatte ist eine Versteifungswand 26 angeordnet, deren Höhe beispielsweise hin zum äußeren Ende 27 der Grundplatte 23 abnimmt. Zwischen zwei benachbarten Versteifungswänden 26 bildet sich ein nach oben offener Hohlraum 28, in den Aufschüttboden 104 einbringbar ist, wodurch eine Auflast auf den zweiten Abschnitt 12 des Fundaments 10 aufbringbar ist. Am inneren Ende 24 Sockelabschnitte 25 der Horizontalelemente 22 sind zwei Vorsprünge 29 vorgesehen, zwischen denen ein Versteifungselement 30 (siehe Fig. 1 und 6a, 6b) anordbar ist. Durch die Vorsprünge wird eine vertikale Bewegung des Versteifungselements 30 vermieden. Diese Vorsprünge 29 sind nur eine mögliche Ausführungsform hierfür. Alternativ können diese auch wegfallen und das Versteifungselement 30, dass dann eine Höhe <= der Höhe des Sockelabschnitts aufweist, wird dann nur lose am inneren Ende 24 des Sockelabschnitts 25 angeordnet. Eine weitere Alternative wäre, dass nur ein Vorsprung 29 oben oder unten am Sockelabschnitt 25 vorgesehen ist.

Das Versteifungselement 30 ist als ein einstückiges Bauteil ausgeführt. Hier ist es bevorzugt als Hülse mit einem Innenraum 15 vorgesehen. Alternativ ist auch ein Vollkörper möglich. Seine Maße sollten dabei bevorzugt so vorgesehen sein, dass es möglich ist, das Versteifungselement 30 mit einem normalen LKW zu transportieren.

Unterhalb des zweiten Abschnitts 12 ist erfindungsgemäß ein dritter Abschnitt vorgesehen.

Dieser dient ebenfalls zur Versteifung des Fundaments 10. Weiterhin ist er hier auch gleichzeitig ein Widerlager für die Befestigungselemente 31 der Ankerstangen 19. Hier ist ein Sockelelement 14 vorgesehen, das aus Segmenten 16 gebildet ist. Die hier wiederum Überlappungsbereiche 17 und Durchbrüche 18 aufweisen. Alternativ können auch mehrere Sockelelemente 14 vorgesehen werden. Unterhalb des dritten Abschnitts 13 ist ein Hohlraum 105 vorgesehen, in den die Ankerstangen/Gewindestanden 19 bzw. andere Alternative Befestigungsmittel (Kabel etc.) münden und auf die beispielsweise Muttern als Befestigungsmittel 31 in Form von Arretier- und Vorspannmittel aufgeschraubt werden. Aus Korrosionsschutzgründen für die Befestigungsmittel wird der Hohlraum 105 mit Ortbeton verfüllt.

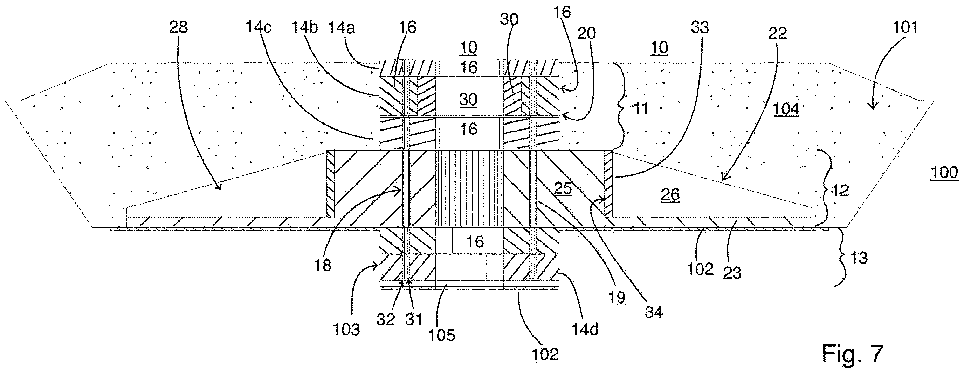

Zwischen den Elementen 14, 16, 22, 30 können Abstandhalter (nicht dargestellt) angeordnet werden, um ein Verfüllen der Fugen mit Mörtel zu ermöglichen/vereinfachen. Fig. 7 bis 14b zeigen eine zweite Ausführungsform eines Fundaments 10. Es ist in Fig. 7 in geschnittener Ansicht in einer Grube 101 im Boden 100 auf einer Sauberkeitsschicht 102 angeordnet. Es weist einen ersten Abschnitt 11 und einen zweiten Abschnitt 12 auf. Weiterhin ist auch ein dritter Abschnitt 13 vorgesehen, der in einer Vertiefung 103 vorgesehen ist.

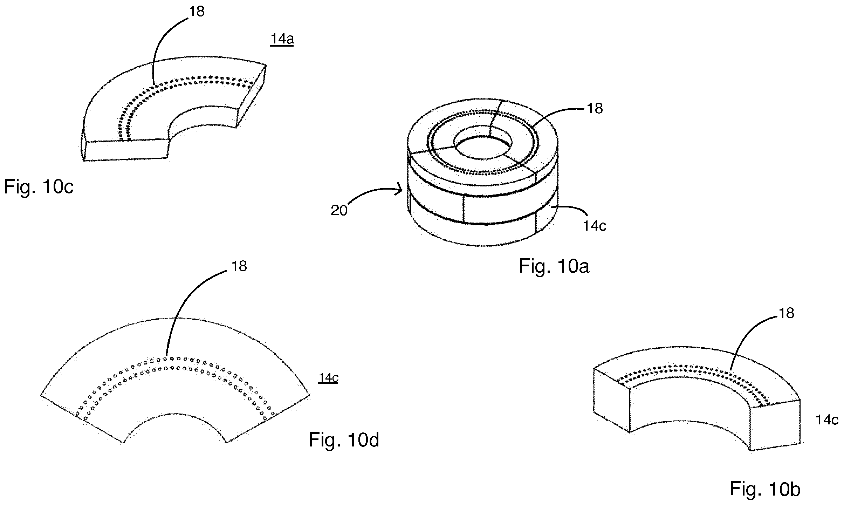

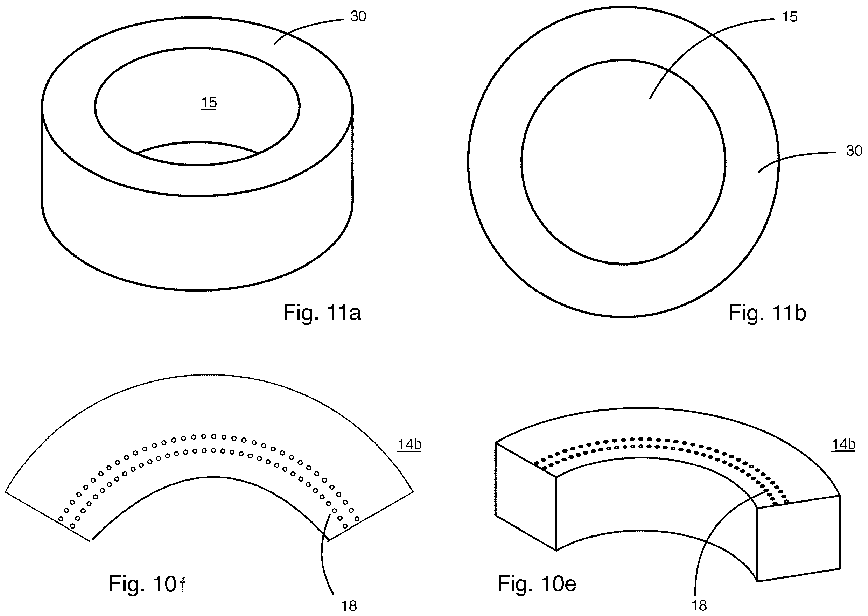

Der erste Abschnitt 11 ist als Sockel 20 aus geschlossenen Sockelelementen 14 aufgebaut (siehe Fig. 10a bis 10f), die hier bevorzugt als Kreisringe ausgeführt sind, so dass der Sockelabschnitt 11 einen Innenraum 15 aufweist. Die Sockelelemente 14 weisen vertikale Durchbrüche 18 auf, in denen nach der Montage des Fundaments 10 Ankerstangen 19 vorgesehen werden, um das Fundament 10 zu verspannen bzw. vorzuspannen. Die Sockelelemente 14 sind aus Segmenten 16 gebildet, die stoßartig zueinander angeordnet sind. Dabei sind unterschiedlich hohe Sockelelement 14a, 14b und 14c beispielhaft hier vorgesehen. Weitere Sockelelemente 14, die auch weitere alternative Höhen aufweisen können, sind möglich. Zuoberst ist ein flaches Widerlagersockelelement 14a vorgesehen. Sockelelement 14b ist höher und weniger breit ausgeführt, so dass in seinem Inneren ein Versteifungselement 30 angeordnet werden kann (siehe Fig. 7). Seine Höhe sollte <= der Höhe des Versteifungselements 30 sein.

Das Versteifungselement 30 (Fig. 11a, 11b) ist als ein einstückiges Bauteil ausgeführt. Hier ist es bevorzugt als Hülse mit einem Innenraum 15 vorgesehen. Alternativ ist auch ein Vollkörper möglich. Seine Maße sollten dabei bevorzugt so vorgesehen sein, dass es möglich ist, das Versteifungselement 30 mit einem normalen LKW zu transportieren.

Als Höhenausgleich bzw. zur Aussteifung ist dann beispielsweise ein weiteres Sockelelement 14c vorgesehen.

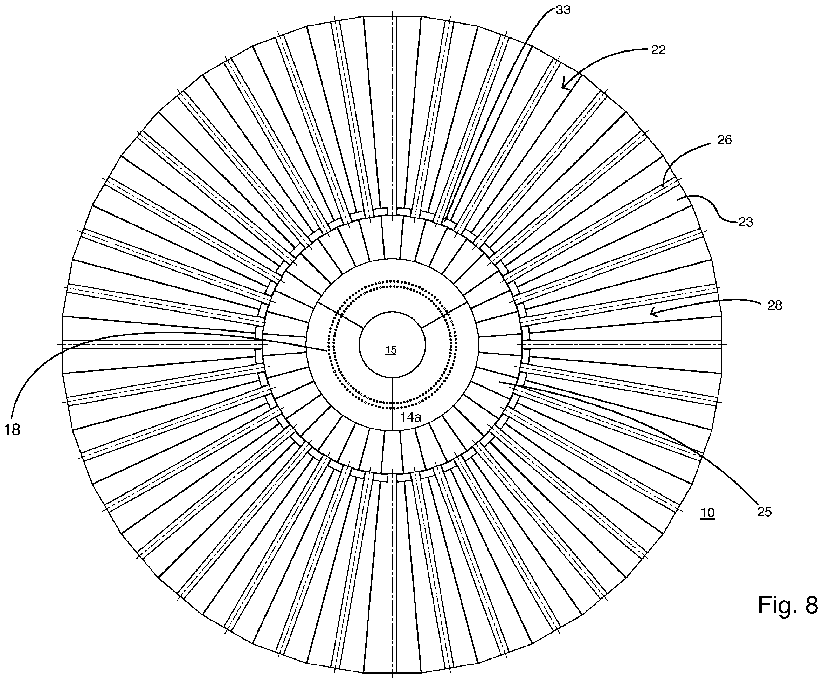

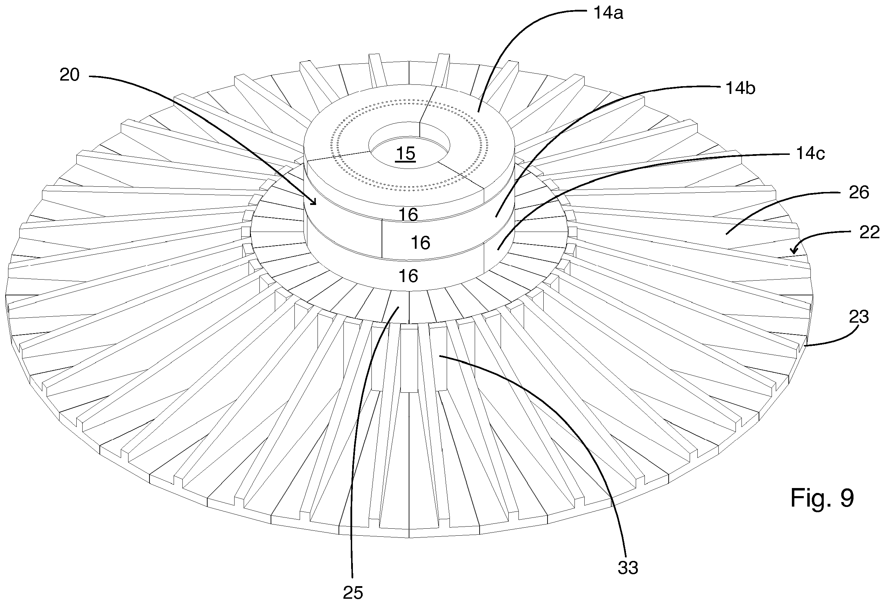

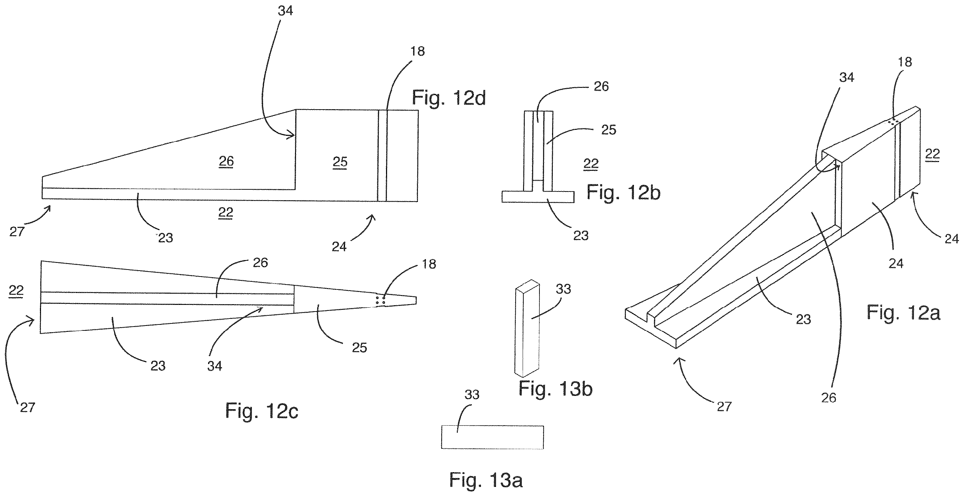

Der zweite Abschnitt 12 ist flächig ausgeführt. Alternativ kann aber auch eine Sternform realisiert werden. Eine Draufsicht auf das Fundament 10 ist in Fig. 8 gezeigt. Fig. 9 zeigt eine räumliche Ansicht des Fundaments 10. Der zweite Abschnitt ist aus Horizontalelementen 22 in Form von Rippenelementen ausgeführt. Diese sind in den Fig. 12a bis 12d dargestellt. Diese erstrecken sich vom Innenraum 15 aus gesehen radial nach außen. Sie weisen eine Grundplatte 23 auf, die trapezförmig ausgeführt ist, so dass alle zusammengesetzten Grundplatten eine polygonale Fläche bilden (siehe Fig.8), die sich einer Kreisform annähert.

Am inneren Ende 24 der Grundplatte 23 ist ein Sockelabschnitt 25 vorgesehen, der mit dem Sockel 20 des ersten Abschnitts 11 korrespondiert. Im Sockelabschnitt 25 sind ebenfalls Durchbrüche 18 vorgesehen. Rechtwinklig auf der Grundplatte ist eine Versteifungswand 26 angeordnet, deren Höhe beispielsweise hin zum äußeren Ende 27 der Grundplatte 23 abnimmt. Zwischen zwei benachbarten Versteifungswänden 26 bildet sich ein nach oben offener Hohlraum 28, in den Aufschüttboden 104 einbringbar ist, wodurch eine Auflast auf den zweiten Abschnitt 12 des Fundaments 10 aufbringbar ist.

Um den zweiten Abschnitt weiter insbesondere vertikal zu verstärken, können Platten 33 (Siehe Fig. 7 und Fig. 13a, 13b) an den äußeren Enden 34 der Sockelabschnitte 25 vorgesehen sein, die beispielsweise gegen den Sockelabschnitt vermörtelt werden. Diese Platten 33 erstrecken sich zwischen zwei Versteifungswänden 26 zweier benachbarter Horizontalelemente 22. Weiterhin erstrecken sie sich bevorzugt bis auf die Grundplatte 23 und schließen oben bündig mit dem Sockelabschnitt 25 ab.

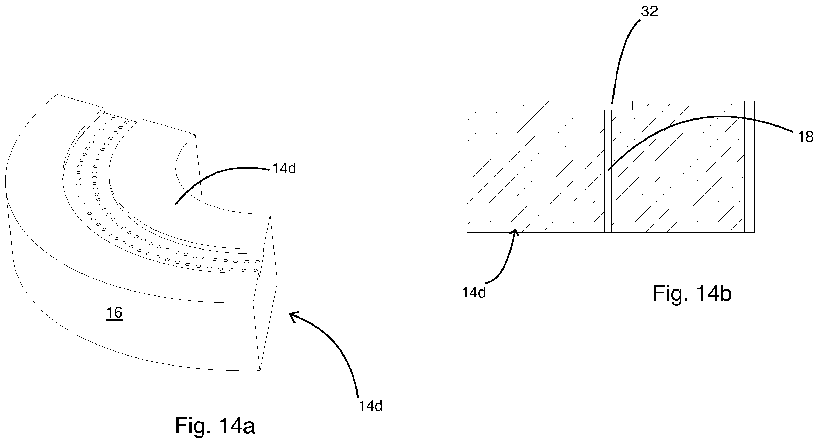

Unterhalb des zweiten Abschnitts 12 ist erfindungsgemäß ein dritter Abschnitt 13 vorgesehen. Dieser dient ebenfalls zur Versteifung des Fundaments 10. Weiterhin ist er hier auch gleichzeitig mit seinem untersten Sockelelement 14d ein Widerlager (siehe auch Fig. 14a, 14b) für die Befestigungselemente 31 der Ankerstangen 19. Hier sind beispielsweise zwei Sockelelement 14 vorgesehen, die aus Segmenten 16 gebildet ist, die hier wiederum stoßartig angeordnet sind. Alternativ können auch weitere Sockelelemente 14 vorgesehen werden. Im untersten Sockelelement 14d ist eine Vertiefung 32 vorgesehen, in die die Befestigungselement 31 eingreifen können, oder in denen Widerlagerelemente (nicht dargestellt) angeordnet werden können.

Unterhalb des dritten Abschnitts 13 ist ein Hohlraum 105 vorgesehen, in den die Ankerstangen/Gewindestanden 19 bzw. andere Alternative Befestigungsmittel (Kabel etc.) münden und auf die beispielsweise Muttern als Befestigungsmittel 31 in Form von Arretier- und Vorspannmittel aufgeschraubt werden. Aus Korrosionsschutzgründen für die Befestigungsmittel wird der Hohlraum 105 mit Ortbeton verfüllt.

Zwischen den Elementen 14, 16, 22, 30 können Abstandhalter (nicht dargestellt) angeordnet werden, um ein Verfüllen der Fugen mit Mörtel zu ermöglichen/vereinfachen.

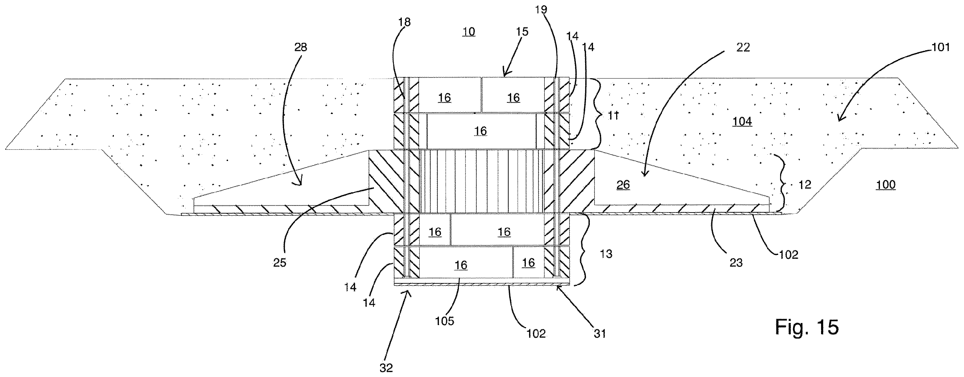

Fig. 15 bis 20b zeigen eine dritte Ausführungsform eines Fundaments 10. Es ist in Fig. 15 in geschnittener Ansicht in einer Grube 101 im Boden 100 auf einer Sauberkeitsschicht 102 angeordnet. Es weist einen ersten Abschnitt 11 und einen zweiten Abschnitt 12 auf. Weiterhin ist auch ein dritter Abschnitt 13 vorgesehen, der in einer Vertiefung 103 vorgesehen ist.

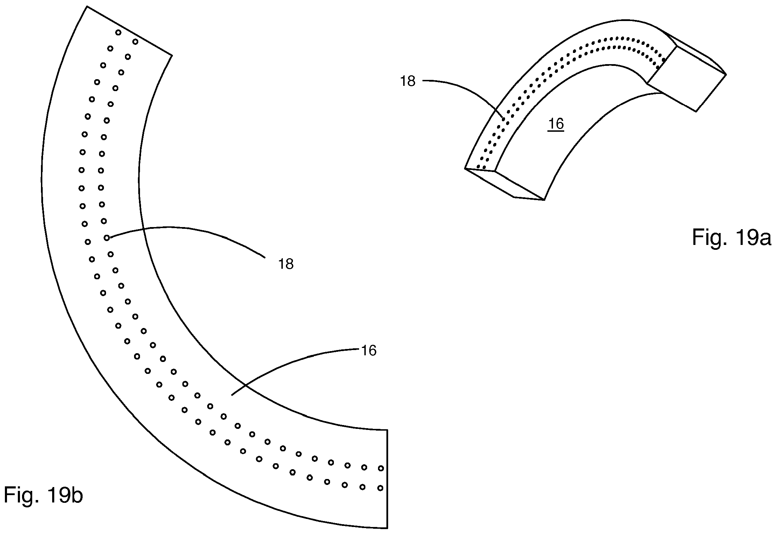

Der erste Abschnitt 11 ist als Sockel 20 aus geschlossenen Sockelelementen 14 aufgebaut, die hier bevorzugt als Kreisringe ausgeführt sind, so dass der Sockelabschnitt 11 einen Innenraum 15 aufweist. Die Sockelelemente 14 weisen vertikale Durchbrüche 18 auf, in denen nach der Montage des Fundaments 10 Ankerstangen 19 vorgesehen werden, um das Fundament 10 zu verspannen bzw. vorzuspannen. Die Sockelelemente 14 sind aus Segmenten 16 (siehe Fig. 19a, 19b) gebildet, die stoßartig zueinander angeordnet sind.

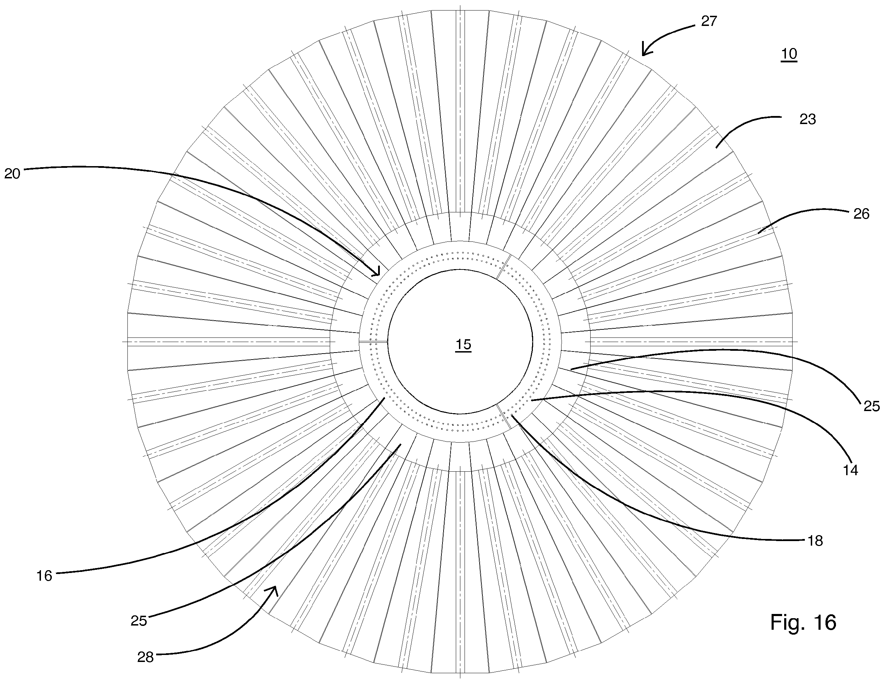

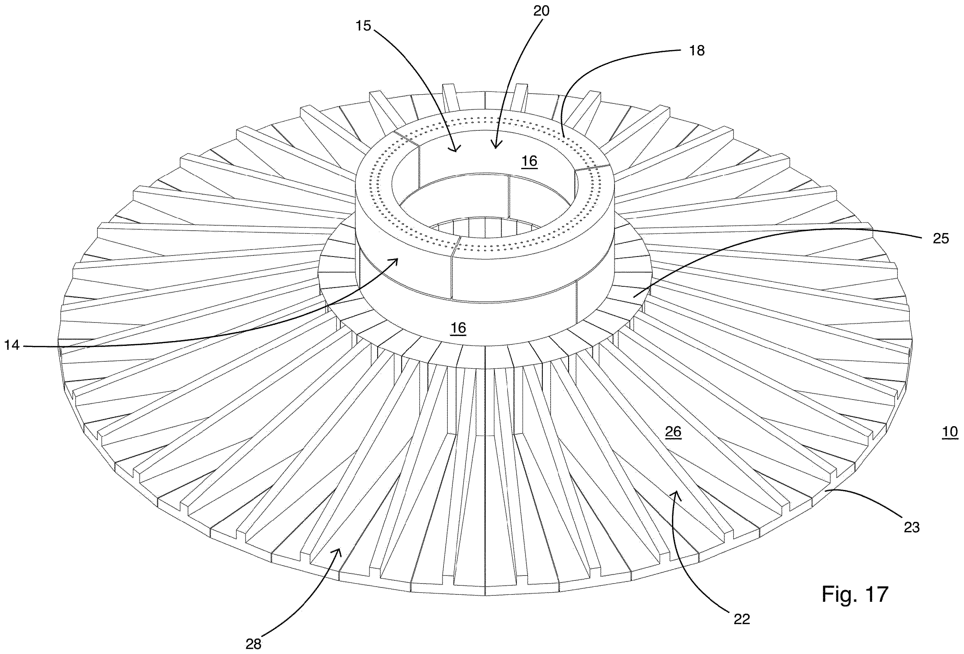

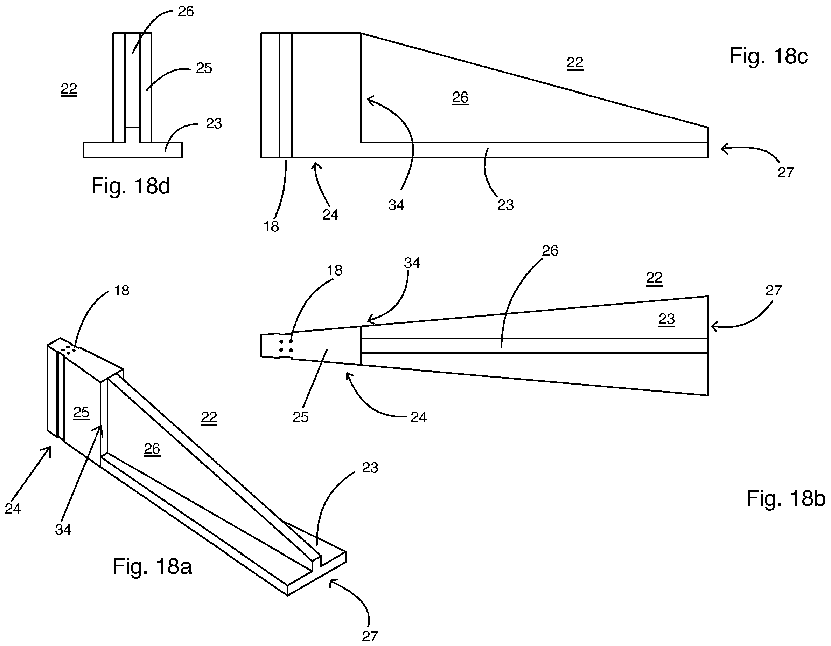

Der zweite Abschnitt 12 ist flächig ausgeführt. Alternativ kann aber auch eine Sternform realisiert werden. Eine Draufsicht auf das Fundament 10 ist in Fig. 16 gezeigt. Fig. 17 zeigt eine räumliche Ansicht des Fundaments 10. Der zweite Abschnitt 12 ist aus Horizontalelementen 22 in Form von Rippenelementen ausgeführt. Diese sind in den Fig. 18a bis 18d dargestellt. Diese erstrecken sich vom Innenraum 15 aus gesehen radial nach außen. Sie weisen eine Grundplatte 23 auf, die trapezförmig ausgeführt ist, so dass alle zusammengesetzten Grundplatten eine polygonale Fläche bilden (siehe Fig.16), die sich einer Kreisform annähert.

Am inneren Ende 24 der Grundplatte 23 ist ein Sockelabschnitt 25 vorgesehen, der mit dem Sockel 20 des ersten Abschnitts 11 korrespondiert. Im Sockelabschnitt 25 sind ebenfalls Durchbrüche 18 vorgesehen. Rechtwinklig auf der Grundplatte ist eine Versteifungswand 26 angeordnet, deren Höhe hin zum äußeren Ende 27 der Grundplatte 23 beispielsweise abnimmt. Zwischen zwei benachbarten Versteifungswänden 26 bildet sich ein nach oben offener Hohlraum 28, in den Aufschüttboden 104 einbringbar ist, wodurch eine Auflast auf den zweiten Abschnitt 12 des Fundaments 10 aufbringbar ist.

Unterhalb des zweiten Abschnitts 12 ist erfindungsgemäß ein dritter Abschnitt 13 vorgesehen. Dieser dient zur Versteifung des Fundaments 10. Es hat sich gezeigt, dass es möglich ist, insbesondere bei großen Sockeldurchmessern, lediglich den dritten Abschnitt 13 vorzusehen, um einen hinreichenden Lastabtrag zu erreichen.

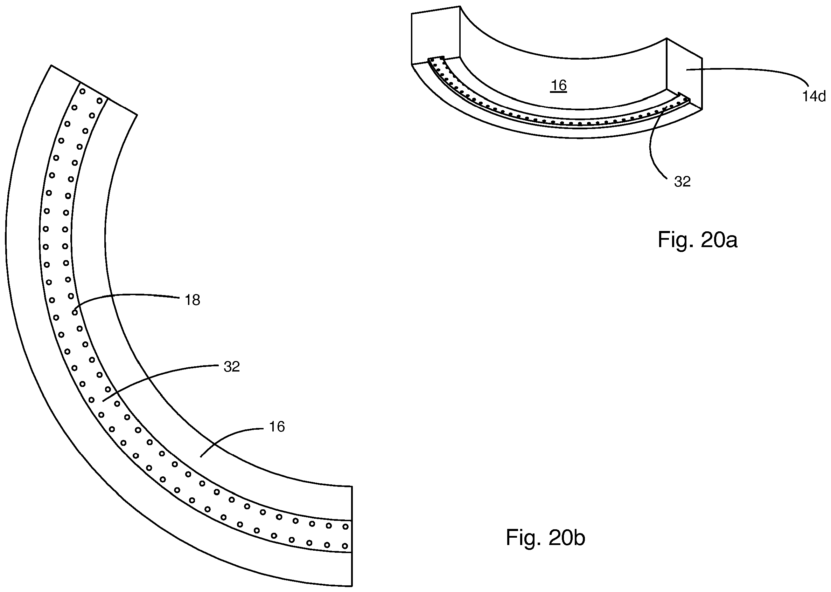

Weiterhin ist der dritte Abschnitt 13 hier auch gleichzeitig mit seinem untersten Sockelelement 14d ein Widerlager (siehe auch Fig. 20a, 20b) für die Befestigungselemente 31 der Ankerstangen 19. Hier sind beispielsweise zwei Sockelelement 14 vorgesehen, die aus Segmenten 16 gebildet ist, die hier wiederum stoßartig angeordnet sind. Alternativ können auch weitere Sockelelemente 14 vorgesehen werden. Im untersten Sockelelement 14d ist eine Vertiefung 32 vorgesehen, in die die Befestigungselement 31 eingreifen können, oder in denen Widerlagerelemente (nicht dargestellt) angeordnet werden können.

Unterhalb des dritten Abschnitts 13 ist ein Hohlraum 105 vorgesehen, in den die Ankerstangen/Gewindestanden 19 bzw. andere Alternative Befestigungsmittel (Kabel etc.) münden und auf die beispielsweise Muttern als Befestigungsmittel 31 in Form von Arretier- und Vorspannmittel aufgeschraubt werden. Aus Korrosionsschutzgründen für die Befestigungsmittel wird der Hohlraum 105 mit Ortbeton verfüllt.

Zwischen den Elementen 14, 16, 22, 30 können Abstandhalter (nicht dargestellt) angeordnet werden, um ein Verfüllen der Fugen mit Mörtel zu ermöglichen/vereinfachen.

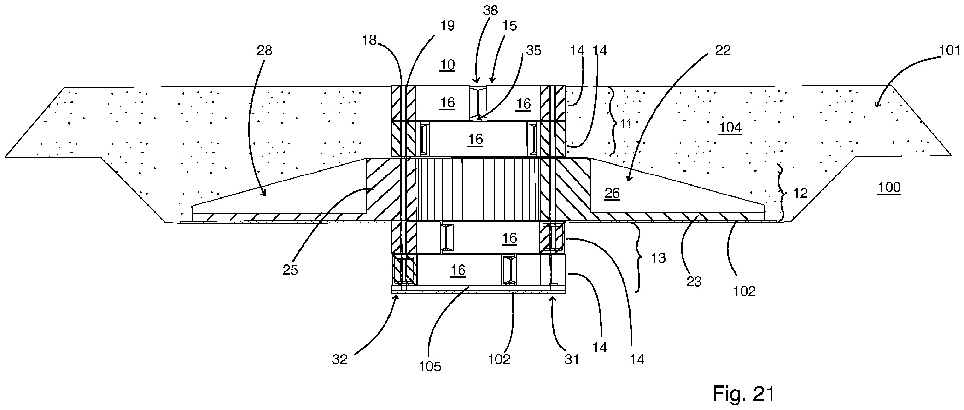

Fig. 21 bis 26 zeigen eine vierte Ausführungsform eines Fundaments 10 ähnlich der dritten Ausführungsform. Es ist in Fig. 21 in geschnittener Ansicht in einer Grube 101 im Boden 100 auf einer Sauberkeitsschicht 102 angeordnet. Es weist einen ersten Abschnitt 11 und einen zweiten Abschnitt 12 auf. Weiterhin ist auch ein dritter Abschnitt 13 vorgesehen, der in einer Vertiefung 103 vorgesehen ist.

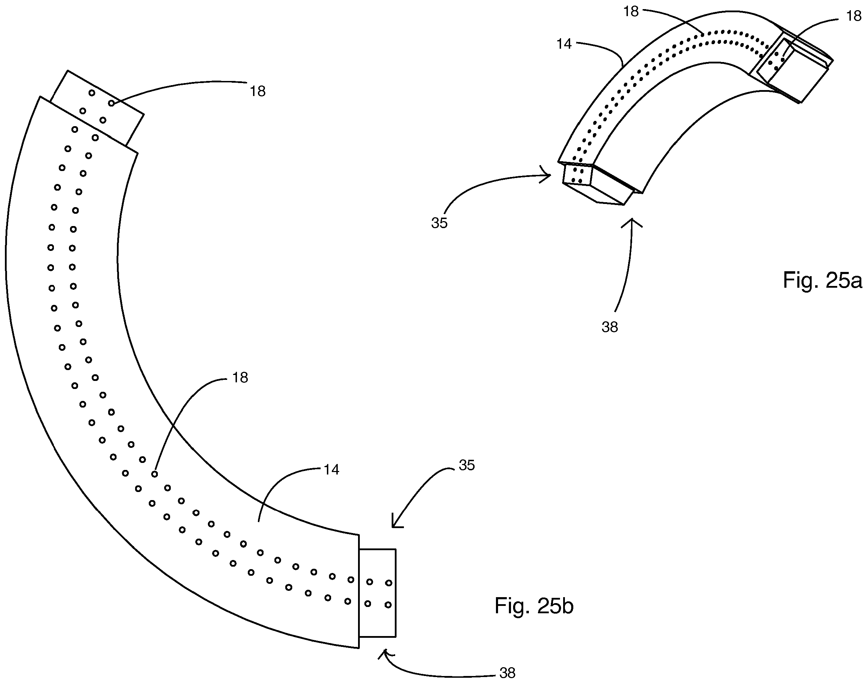

Der erste Abschnitt 11 ist als Sockel 20 aus geschlossenen Sockelelementen 14 aufgebaut, die hier bevorzugt als Kreisringe ausgeführt sind, so dass der Sockelabschnitt 11 einen Innenraum 15 aufweist. Die Sockelelemente 14 weisen vertikale Durchbrüche 18 auf, in denen nach der Montage des Fundaments 10 Ankerstangen 19 vorgesehen werden, um das Fundament 10 zu verspannen bzw. vorzuspannen. Die Sockelelemente 14 sind aus Segmenten 16 (siehe Fig. 25a, 25b) gebildet, die stoßartig zueinander angeordnet sind.

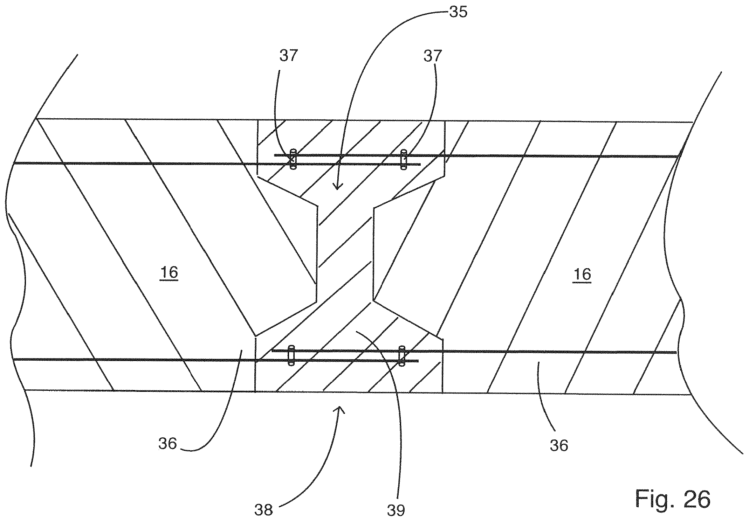

Eine besonders bevorzugte Verbindung der Segmente 16 ist in Fig. 26 dargestellt. Die Segmente sind stoßartig zueinander angeordnet. Allerdings verjüngen sich die Segmente 16 in einem Verbindungsbereich 38. Im Verjüngungsbereich 35 treten Bewehrungselement 36 horizontal aus den Segmenten 16 heraus. Im zur Montage angeordneten Zustand fluchten die Bewehrungselemente 36 der benachbarten Segmente 16 und übergreifen sich im Verbindungsbereich 38/Verjüngungsbereich 35. Diese werden mit Verbindungsmitteln 37 miteinander verbunden, die in Fig. 26 lediglich schematisch dargestellt sind. Auch in den Verjüngungsbereichen 35 weisen die Segmente 16 Durchbrüche 18 auf (siehe Fig. 25a, 25b), die allerdings in Fig. 26 nicht dargestellt sind. Die Verjüngungsbereiche 35 werden nach dem Verbinden der Bewehrungselemente 36 mit Mörtel 39 aufgefüllt, wodurch die Segmente zusätzlich monolithisch/stoffschlüssig miteinander verbunden werden, was zu einer besonders stabilen Verbindung der Segmente 16 führt. Besonders vorteilhaft ist dabei, dass der Übergreifungsbereich bedingt durch das Vorsehen der Verjüngungen deutlich kürzer ausfallen kann. Weiterhin wird die benötigte Menge an Mörtel 39 erheblich reduziert. Dieses macht den Einsatz von schneller bindenden Mörteln wirtschaftlich, wodurch Fundamentmontage schneller durchgeführt werden kann.

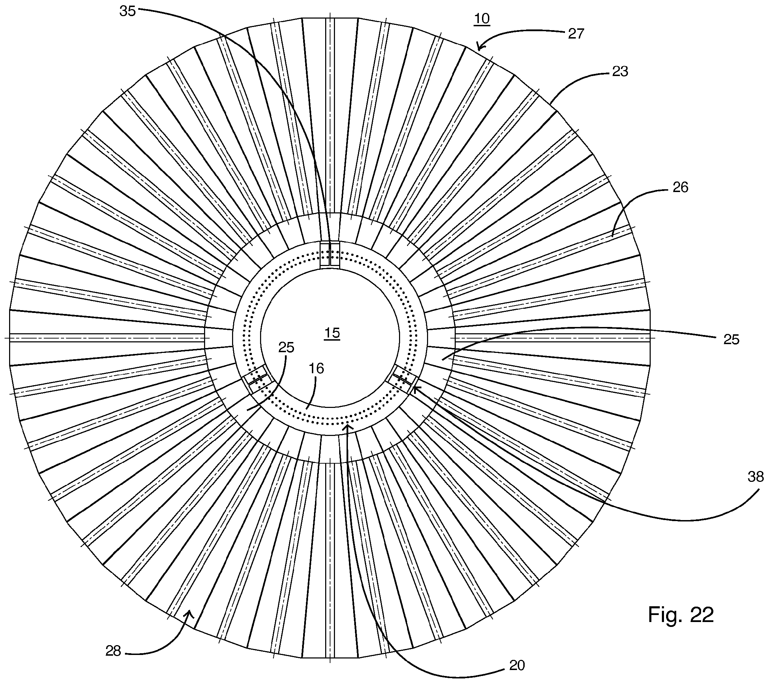

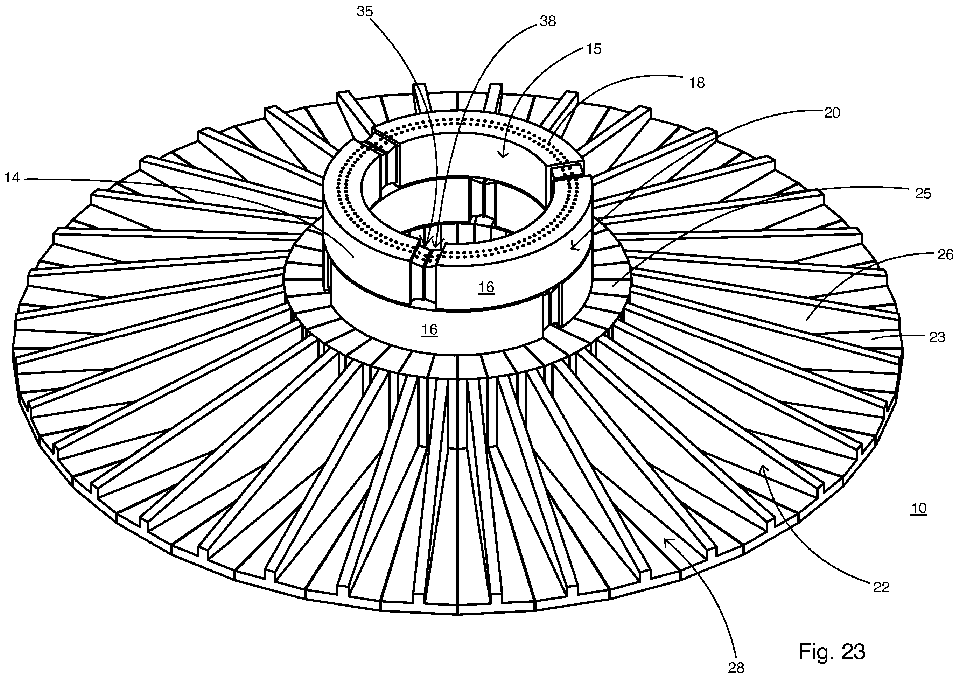

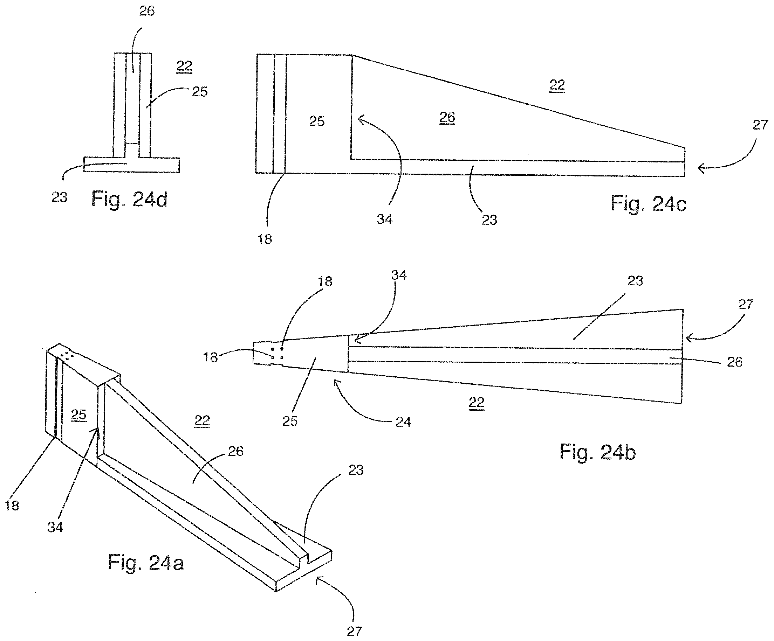

Der zweite Abschnitt 12 ist flächig ausgeführt. Alternativ kann aber auch eine Sternform realisiert werden. Eine Draufsicht auf das Fundament 10 ist in Fig. 22 gezeigt. Fig. 23 zeigt eine räumliche Ansicht des Fundaments 10. Der zweite Abschnitt 12 ist aus Horizontalelementen 22 in Form von Rippenelementen ausgeführt. Diese sind in den Fig. 24a bis 24d dargestellt. Diese erstrecken sich vom Innenraum 15 aus gesehen radial nach außen. Sie weisen eine Grundplatte 23 auf, die trapezförmig ausgeführt ist, so dass alle zusammengesetzten Grundplatten eine polygonale Fläche bilden (siehe Fig. 22), die sich einer Kreisform annähert.

Am inneren Ende 24 der Grundplatte 23 ist ein Sockelabschnitt 25 vorgesehen, der mit dem Sockel 20 des ersten Abschnitts 11 korrespondiert. Im Sockelabschnitt 25 sind ebenfalls Durchbrüche 18 vorgesehen. Rechtwinklig auf der Grundplatte ist eine Versteifungswand 26 angeordnet, deren Höhe hin zum äußeren Ende 27 der Grundplatte 23 beispielsweise abnimmt. Zwischen zwei benachbarten Versteifungswänden 26 bildet sich ein nach oben offener Hohlraum 28, in den Aufschüttboden 104 einbringbar ist, wodurch eine Auflast auf den zweiten Abschnitt 12 des Fundaments 10 aufbringbar ist.

Unterhalb des zweiten Abschnitts 12 ist erfindungsgemäß ein dritter Abschnitt 13 vorgesehen. Dieser dient zur Versteifung des Fundaments 10. Es hat sich gezeigt, dass es möglich ist, insbesondere bei großen Sockeldurchmessern, lediglich den dritten Abschnitt 13 vorzusehen, um einen hinreichenden Lastabtrag zu erreichen.

Weiterhin ist der dritte Abschnitt 13 hier auch gleichzeitig mit seinem untersten Sockelelement 14d ein Widerlager für die Befestigungselemente 31 der Ankerstangen 19. Hier sind beispielsweise zwei Sockelelement 14 vorgesehen, die aus Segmenten 16 gebildet ist, die hier wiederum stoßartig angeordnet sind. Alternativ können auch weitere Sockelelemente 14 vorgesehen werden. Im untersten Sockelelement 14d ist eine Vertiefung 32 vorgesehen, in die die Befestigungselement 31 eingreifen können, oder in denen Widerlagerelemente (nicht dargestellt) angeordnet werden können.

Unterhalb des dritten Abschnitts 13 ist ein Hohlraum 105 vorgesehen, in den die Ankerstangen/Gewindestanden 19 bzw. andere Alternative Befestigungsmittel (Kabel etc.) münden und auf die beispielsweise Muttern als Befestigungsmittel 31 in Form von Arretier- und Vorspannmittel aufgeschraubt werden. Aus Korrosionsschutzgründen für die Befestigungsmittel wird der Hohlraum 105 mit Ortbeton verfüllt.

Zwischen den Elementen 14, 16, 22, 30 können Abstandhalter (nicht dargestellt) angeordnet werden, um ein Verfüllen der Fugen mit Mörtel zu ermöglichen/vereinfachen.

**Bezugszeichenliste**

| | | | |
|---|---|---|---|
| 10 | Fundament | 39 | Mörtel |
| 11 | erster Abschnitt /Sockelabschnitt | 100 | Boden |
| 12 | zweiter Abschnitt | 101 | Baugrube |
| 13 | dritter Abschnitt | 102 | Sauberkeitsschicht |
| 14 | Sockelelement | 103 | Vertiefung |
| 14a | Widerlagersockelelement | 104 | Aufschüttboden |
| 15 | Innenraum | 105 | Hohlraum |
| 16 | Segment | | |
| 17 | Überlappungsbereich | | |
| 18 | Durchbruch | | |
| 19 | Ankerstangen | | |
| 20 | Sockel | | |
| 21 | Stufenabschnitt | | |
| 22 | Horizontalelement/Rippenelement | | |
| 23 | Grundplatte | | |
| 24 | Inneres Ende | | |
| 25 | Sockelabschnitt | | |
| 26 | Versteifungswand | | |
| 27 | äußeres Ende | | |
| 28 | Hohlraum | | |
| 29 | Vorsprung | | |
| 30 | Versteifungselement | | |
| 31 | Befestigungselement | | |
| 32 | Vertiefung | | |
| 33 | Platte | | |
| 34 | äußeres Ende | | |
| 35 | Verjüngungsbereich | | |
| 36 | Bewehrungselement | | |
| 37 | Verbindungsmittel | | |
| 38 | Verbindungsbereich | | |

## Patentansprüche

1. Fundament für eine Windkraftanlage, wobei das Fundament (10) im Wesentlichen vorgefertigte Elemente aufweist, mit einem ersten, sich vertikal erstreckenden sockelartig ausgeführten Abschnitt (11), auf dem ein Turm der Windkraftanlage anordbar ist, und einem zweiten sich im Wesentlichen horizontal erstreckenden Abschnitt (12) als Fundamentkörper, der sich in Kontakt mit dem Boden (100) befindet, wobei der erste Abschnitt (11) oberhalb des zweiten Abschnitts (12) angeordnet ist und wenigstens ein geschlossenes Sockelelement (14) aufweist, das ringförmig oder polygonal ausgeführt ist, und wobei der zweite Abschnitt (12) aus wenigstens zwei Horizontalelementen (22) gebildet ist, die jeweils wenigstens einen Sockelabschnitt (25) aufweisen, wobei das wenigstens eine Sockelelement (14) des ersten Abschnitts (11) und der Sockelabschnitt (25) des Horizontalelements (22) des zweiten Abschnitts (12) im Wesentlichen vertikale Durchbrüche (18) aufweisen, die montiert miteinander fluchten, in denen im Wesentlichen vertikale Verspannelemente (19) angeordnet sind, wobei
ein weiterer sich vertikal erstreckender sockelartig ausgeführten Abschnitt (13) vorgesehen ist, der unterhalb des zweiten Abschnitts (12) angeordnet ist und wenigstens ein geschlossenes Sockelelement (14) aufweist, und wobei der weitere Abschnitt (13) für den Abtrag der Lasten der Windkraftanlage erforderlich ist, **dadurch gekennzeichnet, dass** das geschlossene Sockelelement (14) des weiteren Abschnitts (13) aus wenigstens zwei Segmenten (16) zusammengesetzt ist, dass sich die Segmente (16) in einem Verbindungsbereich (38) überlappen, wobei auch die Durchbrüche (18) im Überlappungsbereich überlappen, oder dass die Segmente (16) in einem Verbindungsbereich mit im Wesentlichen vertikalen Stoßflächen aneinandergrenzen.

2. Fundament für eine Windkraftanlage nach Anspruch 1, **dadurch gekennzeichnet, dass** das geschlossene Sockelelement (14) des ersten Abschnitts (11) aus wenigstens zwei Segmenten (16) zusammengesetzt ist.

3. Fundament für eine Windkraftanlage nach Anspruch 1 oder 2, **dadurch gekennzeichnet, dass dadurch gekennzeichnet, dass** in einem Verbindungsbereich (38) im Wesentlichen horizontale Bewehrungselement (36) aus den Segmenten (16) austreten, die sich im Verbindungsbereich (38) überlappen.

4. Fundament für eine Windkraftanlage nach einem der Ansprüche 1 bis 3, **dadurch gekennzeichnet, dass** sich die Segmente (16) im Verbindungsbereich (38) im Hinblick auf die Höhe der Segmente (16) und/oder der Breite der Segmente (16) verjüngen.

5. Fundament für eine Windkraftanlage nach Anspruch 4, **dadurch gekennzeichnet, dass** in den verjüngten Abschnitten Durchbrüche (18) vorgesehen sind.

6. Fundament für eine Windkraftanlage nach einem der Ansprüche 3 bis 5, **dadurch gekennzeichnet, dass** sich die horizontalen Bewehrungselemente (36) in den Verjüngungsabschnitten (35) überlappen.

7. Fundament für eine Windkraftanlage nach einem der Ansprüche 3 bis 6, **dadurch gekennzeichnet, dass** der Verjüngungsbereich mit einem Mörtel (39) verfüllt ist.

8. Fundament für eine Windkraftanlage nach einem der Ansprüche 1 bis 7, **dadurch gekennzeichnet, dass** das wenigstens eine Sockelelement (14) des ersten Abschnitts (14) und die wenigstens zwei Horizontalelemente (22) des zweiten Abschnitts (12) durch die im Wesentlichen vertikalen Vorspannelemente (19) so miteinander vorgespannt sind, dass keine weiteren Befestigungsmittel, insbesondere horizontale Befestigungsmittel, für den Abtrag der Lasten der Windkraftanlage erforderlich sind.

9. Fundament für eine Windkraftanlage nach Anspruch 8, **dadurch gekennzeichnet, dass** unterhalb oder innerhalb des weiteren Abschnitts (13) wenigstens ein Widerlager (14a) vorgesehen ist, gegen das die im Wesentlichen vertikalen Verspannelemente (19) angeordnet und gespannt sind, und/oder dass oberhalb oder innerhalb des ersten Abschnitts (11) ein Widerlager vorgesehen ist, gegen das die im Wesentlichen vertikalen Verspannelemente (19) angeordnet und gespannt sind.

10. Fundament für eine Windkraftanlage nach einem der Ansprüche 1 bis 9, **dadurch gekennzeichnet, dass** im ersten Abschnitt (11) und/oder im zweiten Abschnitt (12) ein Versteifungselement (30) vorgesehen ist.

11. Fundament für eine Windkraftanlage nach Anspruch 10, **dadurch gekennzeichnet, dass** das Versteifungselement (30) keine Durchbrüche aufweist und/oder befestigungsmittelfrei im ersten oder zweiten Abschnitt (11, 12) angeordnet ist.

12. Fundament für eine Windkraftanlage nach Anspruch 10 oder 11, **dadurch gekennzeichnet, dass** das Versteifungselement (30) als Hülse ausgeführt ist, deren lichter Innendurchmesser im Wesentlichen mit dem lichten Innendurchmesser des ersten und/oder zweiten Abschnitts (11, 12) übereinstimmt.

13. Fundament für eine Windkraftanlage nach einem der Ansprüche 10 bis 12, **dadurch gekennzeichnet, dass** das Versteifungselement (30) von einem Sockelelement (14) mit im Wesentlichen gleicher oder größerer Höhe umschlossen ist, so dass das umschließende Sockelelement (14) und das Versteifungselement (30) im Wesentlichen die gleiche Wandstärke wie die darüber und/oder darunter angeordneten Sockelelemente aufweisen.

14. Fundament für eine Windkraftanlage nach einem der Ansprüche 1 bis 13, **dadurch gekennzeichnet, dass** die vorgefertigten Elemente (16, 22) aus bewehrtem Beton bestehen.

15. Fundament für eine Windkraftanlage nach einem der Ansprüche 1 bis 14, **dadurch gekennzeichnet, dass** das geschlossene Sockelelement (14) des ersten und/oder weiteren Abschnitts (11, 12) hülsenförmig ausgeführt ist.

16. Fundament für eine Windkraftanlage nach einem der Ansprüche 1 bis 15, **dadurch gekennzeichnet, dass** die vertikale Verspannelemente (19) Gewindestangen sind.

## Claims

1. Foundation for a wind power plant, the foundation (10) having substantially prefabricated elements, with a first, vertically extending portion (11) of pedestal-like configuration, on which a tower of the wind power plant can be arranged, and a second substantially horizontally extending portion (12) as foundation body which is in contact with the ground (100), the first portion (11) being arranged above the second portion (12) and having at least one closed pedestal element (14) which is of annular or polygonal configuration, and the second portion (12) being formed from at least two horizontal elements (22) which have in each case at least one pedestal portion (25), the at least one pedestal element (14) of the first portion (11) and the pedestal portion (25) of the horizontal element (22) of the second portion (12) having substantially vertical apertures (18) which are flush with one another in a mounted state and in which substantially vertical bracing elements (19) are arranged, a further vertically extending portion (13) of pedestal-like configuration being provided which is arranged below the second portion (12) and has at least one closed pedestal element (14), and the further portion (13) being required for the transfer of the loads of the wind power plant, **characterized in that** the closed pedestal element (14) of the further portion (13) is assembled from at least two segments (16), **in that** the segments (16) overlap in a connecting region (38), the apertures (18) also overlapping in the overlap region, or **in that** the segments (16) adjoin one another in a connecting region with substantially vertical abutting surfaces.

2. Foundation for a wind power plant according to Claim 1, **characterized in that** the closed pedestal element (14) of the first portion (11) is assembled from at least two segments (16).

3. Foundation for a wind power plant according to Claim 1 or 2, **characterized in that characterized in that** substantially horizontal reinforcement elements (36) emerge in a connecting region (38) from the segments (16) which overlap in the connecting region (38).

4. Foundation for a wind power plant according to one of Claims 1 to 3, **characterized in that** the segments (16) taper in the connecting region (38) with regard to the height of the segments (16) and/or the width of the segments (16).

5. Foundation for a wind power plant according to Claim 4, **characterized in that** apertures (18) are provided in the tapered portions.

6. Foundation for a wind power plant according to one of Claims 3 to 5, **characterized in that** the horizontal reinforcement elements (36) overlap in the tapering portions (35).

7. Foundation for a wind power plant according to one of Claims 3 to 6, **characterized in that** the tapering region is filled with a mortar (39).

8. Foundation for a wind power plant according to one of Claims 1 to 7, **characterized in that** the at least one pedestal element (14) of the first portion (14) and the at least two horizontal elements (22) of the second portion (12) are prestressed with one another by way of the substantially vertical prestressing elements (19) in such a way that no further fastening means, in particular horizontal fastening means, for the transfer of the loads of the wind power plant are required.

9. Foundation for a wind power plant according to Claim 8, **characterized in that** at least one abutment (14a) is provided below or within the further portion (13), against which abutment (14a) the substantially vertical bracing elements (19) are arranged and tensioned, and/or in that an abutment is provided above or within the first portion (11), against which abutment the substantially vertical bracing elements (19) are arranged and tensioned.

10. Foundation for a wind power plant according to one of Claims 1 to 9, **characterized in that** a stiffening element (30) is provided in the first portion (11) and/or in the second portion (12).

11. Foundation for a wind power plant according to Claim 10, **characterized in that** the stiffening element (30) does not have any apertures and/or is arranged free from fastening means in the first or second portion (11, 12).

12. Foundation for a wind power plant according to Claim 10 or 11, **characterized in that** the stiffening element (30) is configured as a sleeve, the clear internal diameter of which coincides substantially with the clear internal diameter of the first and/or second portion (11, 12) .

13. Foundation for a wind power plant according to one of Claims 10 to 12, **characterized in that** the stiffening element (30) is enclosed by a pedestal element (14) with a substantially identical or greater height, with the result that the enclosing pedestal element (14) and the stiffening element (30) have substantially the same wall thickness as the pedestal elements which are arranged above and/or below them.

14. Foundation for a wind power plant according to one of Claims 1 to 13, **characterized in that** the prefabricated elements (16, 22) consist of reinforced concrete.

15. Foundation for a wind power plant according to one of Claims 1 to 14, **characterized in that** the closed pedestal element (14) of the first and/or further portion (11, 12) is of sleeve-shaped configuration.

16. Foundation for a wind power plant according to one of Claims 1 to 15, **characterized in that** the vertical bracing elements (19) are threaded bars.

## Revendications

1. Fondation pour une installation éolienne, la fondation (10) présentant des éléments essentiellement préfabriqués, avec une première section (11) s'étendant verticalement, réalisée à la manière d'un socle, sur laquelle une tour de l'installation éolienne peut être agencée, et une deuxième section (12) s'étendant essentiellement horizontalement en tant que corps de fondation, qui se trouve en contact avec le sol (100), la première section (11) étant agencée au-dessus de la deuxième section (12) et présentant au moins un élément de socle fermé (14), qui est réalisé sous forme annulaire ou polygonale, et la deuxième section (12) étant formée d'au moins deux éléments horizontaux (22) qui présentent chacun au moins une section de socle (25), l'au moins un élément de socle (14) de la première section (11) et la section de socle (25) de l'élément horizontal (22) de la deuxième section (12) présentant des ouvertures essentiellement verticales (18) qui sont montées en alignement l'une avec l'autre, dans lesquelles sont agencés des éléments de serrage essentiellement verticaux (19),
une autre section (13) s'étendant verticalement, réalisée à la manière d'un socle, étant prévue, qui est agencée au-dessous de la deuxième section (12) et qui présente au moins un élément de socle fermé (14), et
l'autre section (13) étant nécessaire pour le déchargement des charges de l'installation éolienne, **caractérisée en ce que** l'élément de socle fermé (14) de l'autre section (13) est composé d'au moins deux segments (16), **en ce que** les segments (16) se chevauchent dans une zone de liaison (38), les ouvertures (18) se chevauchant également dans la zone de chevauchement, ou **en ce que** les segments (16) sont adjacents les uns aux autres dans une zone de liaison avec des surfaces d'about essentiellement verticales.

2. Fondation pour une installation éolienne selon la revendication 1, **caractérisée en ce que** l'élément de socle fermé (14) de la première section (11) est composé d'au moins deux segments (16).

3. Fondation pour une installation éolienne selon la revendication 1 ou 2, **caractérisée en ce que, caractérisée en ce que,** dans une zone de liaison (38), des éléments d'armature essentiellement horizontaux (36) sortent des segments (16), qui se chevauchent dans la zone de liaison (38).

4. Fondation pour une installation éolienne selon l'une quelconque des revendications 1 à 3, **caractérisée en ce que** les segments (16) se rétrécissent dans la zone de liaison (38) en ce qui concerne la hauteur des segments (16) et/ou la largeur des segments (16).

5. Fondation pour une installation éolienne selon la revendication 4, **caractérisée en ce que** des ouvertures (18) sont prévues dans les sections rétrécies.

6. Fondation pour une installation éolienne selon l'une quelconque des revendications 3 à 5, **caractérisée en ce que** les éléments d'armature horizontaux (36) se chevauchent dans les sections de rétrécissement (35).

7. Fondation pour une installation éolienne selon l'une quelconque des revendications 3 à 6, **caractérisée en ce que** la zone de rétrécissement est remplie d'un mortier (39) .

8. Fondation pour une installation éolienne selon l'une quelconque des revendications 1 à 7, **caractérisée en ce que** l'au moins un élément de socle (14) de la première section (14) et les au moins deux éléments horizontaux (22) de la deuxième section (12) sont précontraints l'un avec l'autre par les éléments de précontrainte essentiellement verticaux (19) de telle sorte qu'aucun autre moyen de fixation, notamment des moyens de fixation horizontaux, n'est nécessaire pour le déchargement des charges de l'installation éolienne.

9. Fondation pour une installation éolienne selon la revendication 8, **caractérisée en ce qu**'au moins une butée (14a) est prévue au-dessous ou à l'intérieur de l'autre section (13), contre laquelle les éléments de serrage essentiellement verticaux (19) sont agencés et serrés, et/ou en ce qu'une butée est prévue au-dessus ou à l'intérieur de la première section (11), contre laquelle les éléments de serrage essentiellement verticaux (19) sont agencés et serrés.

10. Fondation pour une installation éolienne selon l'une quelconque des revendications 1 à 9, **caractérisée en ce qu**'un élément de raidissement (30) est prévu dans la première section (11) et/ou dans la deuxième section (12) .

11. Fondation pour une installation éolienne selon la revendication 10, **caractérisée en ce que** l'élément de raidissement (30) ne présente aucune ouverture et/ou est agencé sans moyen de fixation dans la première ou la deuxième section (11, 12).

12. Fondation pour une installation éolienne selon la revendication 10 ou 11, **caractérisée en ce que** l'élément de raidissement (30) est réalisé sous forme de manchon dont le diamètre intérieur libre correspond essentiellement au diamètre intérieur libre de la première et/ou de la deuxième section (11, 12).

13. Fondation pour une installation éolienne selon l'une quelconque des revendications 10 à 12, **caractérisée en ce que** l'élément de raidissement (30) est entouré par un élément de socle (14) ayant une hauteur essentiellement égale ou supérieure, de telle sorte que l'élément de socle (14) qui l'entoure et l'élément de raidissement (30) présentent essentiellement la même épaisseur de paroi que les éléments de socle agencés au-dessus et/ou au-dessous.

14. Fondation pour une installation éolienne selon l'une quelconque des revendications 1 à 13, **caractérisée en ce que** les éléments préfabriqués (16, 22) sont constitués de béton armé.

15. Fondation pour une installation éolienne selon l'une quelconque des revendications 1 à 14, **caractérisée en ce que** l'élément de socle fermé (14) de la première section et/ou de l'autre section (11, 12) est réalisé en forme de manchon.

16. Fondation pour une installation éolienne selon l'une quelconque des revendications 1 à 15, **caractérisée en ce que** les éléments de serrage verticaux (19) sont des tiges filetées.
